# EUROPÄISCHE PATENTSCHRIFT

(11) **EP 2 154 464 B1**
(45) Veröffentlichungstag und Bekanntmachung des Hinweises auf die Patenterteilung: **21.10.2015**
(21) Anmeldenummer: 09165645.4
(22) Anmeldetag: 16.07.2009
(51) Int. Cl.: F28F 9/00

(54) **Ladeluftkühler**
Intercooler
Refroidisseur d'air de suralimentation

(30) Priorität: 08.08.2008 DE 102008036969
(43) Veröffentlichungstag der Anmeldung: 17.02.2010
(73) Patentinhaber: MAHLE Behr GmbH & Co. KG, 70469 Stuttgart (DE)
(72) Erfinder: Pillas, Thomas, 70825 Münchingen (DE); Käser, Jochen, 70180 Stuttgart (DE)
(74) Vertreter: Grauel, Andreas

(56) Entgegenhaltungen:
- EP-A2- 1 296 108
- EP-A2- 1 378 720
- JP-A- 2002 168 589
- US-A- 1 787 448
- US-A- 2 615 687

## Beschreibung

Die Erfindung betrifft einen Ladeluftkühler eines Kraftfahrzeuges, mit einem Kühlernetz bestehend wenigstens aus Kühlmittelrohren, welche zwischen zwei Kühlmittelsammelkästen angeordnet sind.

Wärmeübertrager sind aus dem Stand der Technik auch aus dem Bereich des Kraftfahrzeugwesens gut bekannt. Hierbei können die Wärmeübertrager unterschiedlichste Kühlfunktionen übernehmen. Beispielsweise handelt es sich bei einem solchen Wärmeübertrager um einen Hochtemperaturkühler, der eine Kühlflüssigkeit einer Brennkraftmaschine eines Kraftfahrzeuges kühlt, Neben einem solchen Hauptkühler gibt es noch eine Vielzahl an Nebenkühlern, etwa in Form von Niedertemperaturkühlern, wie beispielsweise Ölkühler zum Kühlen von Öl in einem Ölkreislauf oder Ladeluftkühler zum Kühlen einer Ladeluft, welche in einen Verbrennungsraum der Brennkraftmaschine geleitet werden kann. Die Wärmeübertrager werden hierbei zumeist in einem Motorraum des Kraftfahrzeuges angeordnet. Insbesondere Ladeluftkühler können besonders platzsparend in Bauteile oder Bauteilgruppen der Brennkraftmaschine integriert werden.

Ein solcher Ladeluftkühler ist beispielsweise aus der Offenlegungsschrift DE 10 2006 026 036 A1 bekannt, bei welchem Ladeluft mittels eines in Strömungskanälen strömenden Kühlmittels gekühlt werden kann, wobei die Strömungskanäle bei diesem Ladeluftkühler durch Flachrohre gebildet sind. Die Flachrohre erstrecken sich von einem ersten Kühlmittelsammelkasten bis hin zu einem zweiten Kühlmittelsammelkasten, so dass zwischen den Kühlmittelsammelkästen das Kühlmittel strömen kann. An dem ersten Kühlmittelsammelkasten sind ein Kühlmitteleintritt und ein Kühlmittelaustritt vorgesehen, über welche der Ladeluftkühler an einen Kühlmittelkreislauf angeschlossen werden kann. Zusätzlich weist der erste Kühlmitteisammelkasten einen Flansch mit Bohrungen auf, mittels welchem der Ladeluftkühler an einem Kompressorgehäuse angeschraubt werden kann. Das Kompressorgehäuse umschließt hierbei den Ladeluftkühler bis auf den Flansch und den Kühlmitteleintritt bzw. austritt vollständig, so dass die zu kühlende Ladeluft gezielt um die Flachrohre geleitet werden kann.

Ein solches Anordnen eines derartigen Ladeluftkühlers in ein Kompressorgehäuse nimmt jedoch sehr viel Bauraum in Anspruch, da das Kompressorgehäuse in der Regel als relativ dickwandiges Gußteil gestaltet ist, welches zudem noch eine Öffnung umbauen muss, in welche der Ladeluftkühler eingesteckt werden kann. Darüber hinaus muss um diese Öffnung herum noch genügend Material vorgesehen werden, an weiches der Flansch des Ladeluftkühlers angeschraubt werden kann. Jedoch steht ein solcher Bauraum für derart großvolumige Kompressorgehäuse immer weniger zur Verfügung, da Kraftfahrzeuge immer komplexer bauen.

Es ist Aufgabe vorliegender Erfindung einen gattungsgemäßen Ladeluftkühle, weiter zu entwickeln, so dass er insbesondere Bauraum sparender innerhalb eines Motorraums eines Kraftfahrzeuges angeordnet werden kann.

Die Aufgabe der Erfindung wird von einem Ladeluftkühler eines Kraftfahrzeuges, mit einem Kühlernetz bestehend wenigstens aus Kühlmittelrohren, welche zwischen zwei Kühlmittelsammelkästen angeordnet sind, gelöst, wobei sich der Ladeluftkühler dadurch auszeichnet, dass der Ladeluftkühler eine Montagevorrichtung umfasst, mittels welcher der Ladeluftkühler an einem weiteren Funktionsbauteil anordenbar ist.

Der Ladeluftkühler ist erfindungsgemäß mit einer Montagevorrichtung ausgestattet, welche es erlaubt, den vorliegenden Ladeluftkühler besonders Bauraum sparend und damit vorteilhaft beispielsweise in Bauteile und/oder in Anbauaggregate einer Brennkraftmaschine, etwa eines Kraftfahrzeuges, einzubauen. Dies erscheint auf den ersten Blick widersinnig, da der Ladeluftkühler vorliegend mit einer zusätzlichen Komponente, nämlich mit der Montagevorrichtung, versehen und zum Einbau bereit gestellt wird. Jedoch ermöglicht die Montagevorrichtung des Ladeluftkühler beispielsweise eine Schweißverbindung zwischen dem Ladeluftkühler und einem Gußteil, an oder in welchem der Ladeluftkühler angeordnet werden soll. Eine derartige stoffschlüssige Verbindung nimmt wesentlich weniger Bauraum ein, als beispielsweise die eingangs beschriebene Steck/Schraubverbindung.

Eine direkte Schweißverbindung etwa zwischen Kühlmittelrohren des Ladeluftkühlers und einem Gußteil kann schnell zu Beschädigungen an diesen Komponenten führen, wodurch der Ladeluftkühler unbrauchbar werden würde.

Bei einem Ladeluftkühler entzieht die Umgebungsluft bzw. Ladeluft dem Kühlmittel in den Kühlmittelrohren des Ladeluftkühlers nicht Wärmeenergie sondern wird umgekehrt der Ladeluft Wärmeenergie entzogen. Derartige Ladeluftkühler werden immer häufiger unmittelbar vor Kraftstoffansaugeinrichtungen einer Brennkraftmaschine angeordnet und müssen allein aus diesem Grund dort möglichst Bauraum sparend untergebracht werden können.

Bei einem Ladeluftkühler besteht ein Kühlernetz häufig lediglich aus Kühlmittelrohren zwischen zwei Kühlmitteisammelkästen. Es kann jedoch auch umfassender aufgebaut sein. Beispielsweise kann es zusätzlich mit Kühlrippen ausgestattet sein, die einen Wärmeübergang zwischen der Ladeluft und dem Kühlmittel verbessern können.

Der Begriff "Kühlmittelsammeikasten" beschreibt in diesem Zusammenhang jegliche Gebilde, in welche Enden der Kühlrohre des Ladeluftkühlers hinein ragen können, und in welche wenigstens ein Kühlmittel in den Ladeluftkühler eingeleitet, ausgeleitet und/oder einfach bzw, mehrfach umgelenkt werden kann. Die Kühlmitteisammelkästen sitzen hierbei vorzugsweise seitlich eines zumindest von den Kühlrohren gebildeten Kühlernetzes des Ladeluftkühlers und können somit einen den Ladeluftkühler begrenzenden Randbereich bilden.

Mit dem Begriff "Montagevorrichtung" werden jegliche Gebilde beschrieben, welche dazu geeignet sind, einen Ladeluftkühler dauerhaft und betriebssicher zu tragen bzw. zu halten, so dass der Ladeluftkühler mittels der Montagevorrichtung an ein weiteres Funktionsbauteil befestigt werden kann.

Darüber hinaus weist die Montagevorrichtung Mittel zum Ausgleichen von temperaturabhängigen Ausdehnungen des Ladeluftkühlers auf. Mittels der Mittel zum Ausgleichen von temperaturabhängigen Ausdehnungen, nachfolgend kurz Ausgleichsmittel genannt, gelingt es in vorteilhafter Weise, die Gefahr von Beschädigungen an Komponenten des Ladeluftkühlers zu reduzieren, die beispielsweise durch eine zu starre Befestigung des Ladeluftkühlers hervor gerufen werden können.

Besonders vorteilhaft ist es in diesem Zusammenhang, wenn die Montagevorrichtung Mittel zum Kompensieren einer axialen Längenänderung des Ladeluftkühlers aufweist. Besonders die Kühlmittelrohre des Ladeluftkühlers dehnen sich bei einer Erwärmung bekanntermaßen axial relativ stark aus, so dass es bei einem zu starr befestigten Ladeluftkühler nur eine Frage der Zeit ist, bis es an diesem hierdurch zu Defekten kommt. Es versteht sich, dass die Mittel zum Kompensieren einer axialen Längenänderung vielfältig realisiert sein können. Besonders einfach jedoch können sie mit den vorliegenden Ausgleichsmitteln bereit gestellt werden.

Kumulativ oder alternativ hierzu kann die Montagevorrichtung Mittel zum Reduzieren von Thermospannungen innerhalb des Ladeluftkühlers aufweisen, wodurch die Gefahr von kritischen Spannungen, insbesondere innerhalb des Ladeluftkühlers, vorteilhafter Weise reduziert werden kann. Besondere Spannungsrisse an Lötverbindungen des Ladeluftkühlers können hierdurch gut vermieden werden. Auch die Mittel zum Reduzieren von Thermospannungen können durch die vorliegenden Ausgleichsmittel einfach realisiert werden.

Um den Ladeluftkühler besonders gut mit Umgebungsluft durchströmen lassen zu können, überdeckt die Montagevorrichtung den Ladeluftkühler an drei Seiten, zumindest teilweise. Beispielsweise ist die Montagevorrichtung im Bereich einer Kühfernetzftäche, in welche Umgebungsluft zum Kühlen in das Kühlernetz einströmt, offen.

Die Montagevorrichtung weist einen u-förmig gebogenen Grundkörper auf, der aus einem schweißbaren Material hergestellt ist.

Beispielsweise ist der u-förmig gebogene Grundkörper aus einem Aluminiumblech hergestellt, welches eine Blechdicke von weniger als 5 mm, vorzugsweise eine Blechdicke von 2 mm oder 3 mm, aufweist. Insbesondere ein Blech aus Aluminium oder einer Legierung hiervon eignet sich zur Realisierung der Montagevorrichtung sehr gut, da auch andere Komponenten des Ladeluftkühlers aus Aluminium bestehen.

Weist der u-förmig gebogene Grundkörper einen Boden auf, an welchem die Ausgleichmittel angeordnet sind, kann die Montagevorrichtung besonders klein bauen.

Der u-förmig gebogene Grundkörper weist zwei Schenkel auf an welchen der Ladeluftkühler angeschweißt, ist. Ist der Ladeluftkühler an den Schenkeln der Montagevorrichtung angeschweißt, kann zwischen dem Ladeluftkühler und der Montagevorrichtung eine stoffschlüssige und damit besonders innige Verbindung hergestellt werden. Mittels dieser stoffschlüssigen Verbindung ist konstruktiv einfach eine Festlagereinrichtung zwischen dem Ladeluftkühler und der Montagevorrichtung realisiert.

Die Ausgleichsmittel umfassend vorliegend eine Loslagereinrichtung, mittels welcher der Ladeluftkühler an der Montagevorrichtung fest aber beweglich gelagert sein kann. Somit können insbesondere gegenüber der Festlagereinrichtung temperaturabhängige Ausdehnungen des Ladeluftkühlers gut ausgeglichen werden.

Die Ausgleichsmittel können besonders betriebssicher bereit gestellt werden, wenn erste Komponenten der Ausgleichsmittel von dem Boden der Montagevorrichtung gebildet sind. Beispielsweise ist der Boden von der Gestalt, dass er eine zylinder- oder wannenähnliche Vertiefung ausbildet.

In diesem Zusammenhang ist es vorteilhaft, wenn weitere Komponenten der Ausgleichsmittel von einem Kastenteil des Kühlmittelsammelkastens gebildet sind. Beispielsweise ist das Kastenteil derart ausgebildet, dass es in die Vertiefung des Bodens eingeschoben werden kann. Somit kann das Kastenteil einerseits von den Seiten der zylinder- oder wannenähnlichen Vertiefung gestützt und andererseits kann das Kastenteil in der Vertiefung vor und zurück bewegt werden.

Weitere Vorteile, Ziele und Eigenschaften vorliegender Erfindung werden anhand nachfolgender Beschreibung anliegender Zeichnung erläutert, in welcher ein Ladeluftkühler und eine Montagevorrichtung dargestellt sind.

Es zeigt
- Figur 1: schematisch eine Ansicht einer Montageeinheit aus einem Ladeluftkühler und einer Montagevorrichtung,
- Figur 2: schematisch eine perspektivische Ansicht der Montagevorrichtung aus der Figur 1, und
- Figur 3: schematisch einen teilweise Längsschnitt einer weiteren Montageeinheit.

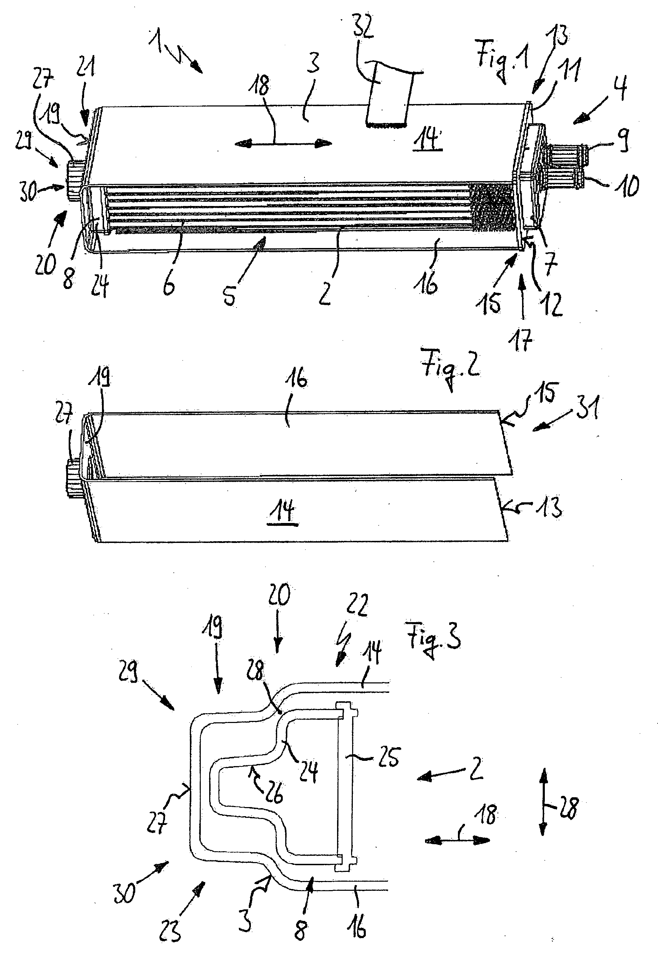

Die in der Figur 1 gezeigte Montageeinheit 1 besteht im Wesentlichen aus einem Ladeluftkühler 2 und einer Montagevorrichtung 3.

Der Ladeluftkühler 2 umfasst ein Kühlernetz 5, welches vorliegend aus einer Vielzahl an Kühlmittelrohren 6 besteht. Die Kühlmittelrohre 6 enden in seitlichen Kühlmittelsammelkästen 7 und 8, wobei an dem ersten Kühlmittelsammelkasten 7 ein Einlaufstutzen 9 und ein Auslaufstutzen 10 vorgesehen sind, über welche ein Kühlmittel in den Ladeluftkühler 2 einströmen bzw. aus dem Ladeluftkühler 2 ausströmen kann. Zusätzlich weist der erste Kühlmittelsammelkasten 7 einen Rohrboden 11 auf, der als Kragen 12 seitlich über den ersten Kühlmittelsammelkasten 7 hervor steht.

Mittels des Kragens 12 ist der Ladeluftkühler 2 an der Montagevorrichtung 3 geschweißt. Hierdurch erfährt der Ladeluftkühler 2 eine besonders innige Verbindung mit der Montagevorrichtung 3. Genauer gesagt, ist der Kragen 12 an einem ersten Ende 13 eines ersten Schenkels 14 der Montagevorrichtung 3 und an einem ersten Ende 15 eines zweiten Schenkels 16 der Montagevorrichtung 3 stoffschlüssig befestigt. Eine solche Schweißverbindung stellt ein Festlager 17 zwischen dem Ladeluftkühler 2 und der Montagevorrichtung 3 dar.

Um etwa eine temperaturbedingte Längung des Ladeluftkühlers 2 in axialer Richtung 18 gut ausgleichen zu können, weist die Montageeinheit 1 am Boden 19 der Montagevorrichtung 3 ein Loslager 20 zwischen dem Ladeluftkühler 2 und der Montagevorrichtung 3 auf. Das Loslager 20 bildet vorliegend Mittel 21 zum Ausgleichen von temperaturabhängigen Ausdehnungen aus.

Der Aufbau eines solchen Loslagers 20 ist detailiert anhand einer Detaildarstellung 22 einer weiteren Montageeinheit 23 aus der Figur 3 im Bereich eines Bodens 19 der dort illustrierten Montagevorrichtung 3 gezeigt und erläutert. An den Boden 19 schließen sich auch in diesem Ausführungsbeispiel zwei Schenkel 14 und 16 an, an welchen ein Ladeluftkühler 2 angeschweißt werden kann. Innerhalb der Montagevorrichtung 3 ist der Ladeluftkühler 2 angeordnet, der nach der Detaildarstellung 22 lediglich mittels eines Kastenteils 24 und eines weiteren Rohrbodens 25 eines zweiten Kühlmittelsammelkastens 8 verkörpert ist. Mittel 21 zum Ausgleichen von temperaturabhängigen Ausdehnungen werden bei diesem Ausführungsbeispiel einerseits mittels einer ersten Komponente 26 in Gestalt des zapfenförmig ausgebildeten Kastenteils 24 und andererseits mittels einer weiteren Komponente 27 in Gestalt eines wannenförmig ausgebildeten Bodens 19 gebildet. Die erste Komponente 26 bzw. das zapfenförmig ausgebildete Kastenteil 24 sind durch einen Spalt 28 von der weiteren Komponente 27 bzw. von dem wannenförmig ausgebildeten Boden 19 beabstandet, so dass ein diesbezügliche Längenausgleich in axialer Richtung 18 problemlos erfolgen kann. Auch eine Ausdehnung in radialer Richtung 28 des Ladeluftkühlers 2 kann hierdurch in vorteilhafter Weise gewährleistet werden.

Insgesamt ist hierdurch insbesondere die Gefahr verringert, dass in dem Ladeluftkühler 2 kritische Spannungen auftreten können, die den Ladeluftkühler 2 zumindest auf Dauer schädigen können. Deshalb realisieren die Mittel 21 zum Ausgleichen von temperaturabhängigen Ausdehnungen vorteilhafter Weise zum einen sogleich Mittel 29 zum Reduzieren von Thermospannungen innerhalb des Ladeluftkühlers 2 und zum anderen Mittel 30 zum Kompensieren einer axialen Längenänderung des Ladetuftkühlers 2.

Hinsichtlich der in der Figur 1 gezeigten Montageeinheit 1 ist das dortige Kastenteil 24 ähnlich hergestellt, wie das Kastenteil 24 der weiteren Montageeinheit 23. Jedoch ist der Boden 19 der Montagevorrichtung 3 der Montageeinheit 1 als zylindrische weitere Komponente 27 der Mittel 21 zum Ausgleichen von temperaturabhängigen Ausdehnungen gestaltet.

Nach der Darstellung der Figur 2 ist noch besonders gut der u-förmig gebogene Grundkörper 31 der Montagevorrichtung 3 in einem unmontierten Zustand zu erkennen, mittels welchem die Montageeinheit 1 vorteilhaft an einem weiteren Funktionsbauteil 32 (siehe nochmals Figur 1) angeschweißt sein kann. Hierdurch kann der Ladeluftkühler 2 vorteilhafter Weise mittelbar an dem weiteren Funktionsbauteil 32 befestigt werden.

## Patentansprüche

1. Ladeluftkühler eines Kraftfahrzeuges, mit einem Kühlernetz (5) bestehend wenigstens aus Kühlmittelrohren (6), welche zwischen zwei seitlich angeordneten Kühlmittelsammelkästen (7, 8) angeordnet sind, wobei der Ladeluftkühler (4) eine Montagevorrichtung (3) umfasst, mittels welcher der Ladeluftkühler (4) an einem weiteren Funktionsbauteil (32) anordenbar ist, wobei die Montagevorrichtung (3) Mittel (21) zum Ausgleichen von temperaturabhängigen Ausdehnungen des Ladeluftkühlers (4) aufweist, wobei die Montagevorrichtung (3) den Ladeluftkühler (4) an nur drei Seiten zumindest teilweise überdeckt, wobei die Montagevorrichtung (3) einen u-förmig gebogenen Grundkörper (31) aufweist, der aus einem schweißbaren Material hergestellt ist, wobei der u-förmig gebogene Grundkörper (31) einen Boden (19) aufweist, an welchem Ausgleichmittel (21) angeordnet sind und der u-förmig gebogene Grundkörper (31) zwei Schenkel (14, 16) aufweist, an welchen der Ladeluftkühler (4) angeschweißt ist, wobei der erste Kühlmittelsammelkasten (7) einen Rohrboden (11) aufweist, der als Kragen (12) seitlich über den ersten Kühlmittelsammelkasten (7) hervor steht, wobei der Ladeluftkühler mittels des Kragens an der Montagevorrichtung geschweiß ist, dergestalt, dass der Kragen (12) an einem ersten Ende (13) des ersten Schenkels (14) der Montagevorrichtung (3) und an einem ersten Ende des zweiten Schenkels (16) an der Montagevorrichtung (3) stoffschlüssig befestigt ist, so dass eine solche Schweißverbindung ein Festlager zwischen dem Ladeluftkühler (2) und der Montagevorrichtung (3) darstellt, wobei am Boden der Montagevorrichtung (3) ein Loslager (20) zwischen dem Ladeluftkühler (2) und der Montagevorrichtung (3) vorgesehen ist.

2. Ladeluftkühler (4) nach Anspruch 1, **dadurch gekennzeichnet, dass** erste Komponenten (26) der Ausgleichsmittel (21) von einem Boden (19) der Montagevorrichtung (3) gebildet sind.

3. Ladeluftkühler (4) nach einem der Ansprüche 1 oder 2, **dadurch gekennzeichnet, dass** weitere Komponenten (27) der Ausgleichsmittel (21) von einem Kastenteil (24) des Kühlmittelsammelkastens (8) gebildet sind.

## Claims

1. Intercooler of a vehicle, comprising a radiator network (5) consisting at least of coolant pipes (6) arranged between two laterally arranged coolant collecting boxes (7, 8), whereby the intercooler (4) comprises a mounting device (3) by means of which the intercooler (4) can be arranged on a further functional component (32), whereby the mounting device (3) comprises means (21) for compensating temperature-dependent expansions of the intercooler (4), whereby the mounting device (3) covers the intercooler (4) at least partially on only three sides, whereby the mounting device (3) has a base body (31) bent in a U-shape which is made of a weldable material, whereby the base body (31) bent in a U-shape has a bottom (19) on which compensation means (21) are arranged and the base body (31) bent in a U-shape has two limbs (14, 16) to which the intercooler (4) is welded, whereby the first coolant collecting box (7) has a pipe base (11) which protrudes laterally over the first coolant collecting box (7) as a collar (12), whereby the intercooler is welded to the mounting device by means of the collar in such a way that the collar (12) is cohesively attached to a first end (13) of the first limb (14) of the mounting device (3) and to a first end of the second limb (16) of the mounting device (3), so that such welded joint forms a fixed bearing between the intercooler (2) and the mounting device (3), whereby a floating bearing (20) is provided between the intercooler (2) and the mounting device (3) on the base of the mounting device (3).

2. Intercooler (4) according to claim 1, **characterised in that** first components (26) of the compensation means (21) are formed from a base (19) of the mounting device (3).

3. Intercooler (4) according to one of claims 1 or 2, **characterised in that** further components (27) of the compensation means (21) are formed from a box part (24) of the coolant collecting box (8).

## Revendications

1. Refroidisseur d'air de suralimentation d'un véhicule automobile, comprenant un réseau de refroidisseurs (5) se composant au moins de tubes de liquide de refroidissement (6) qui sont disposés entre deux bacs collecteurs de liquide de refroidissement (7, 8) disposés latéralement, où le refroidisseur d'air de suralimentation (4) comprend un dispositif de montage (3) au moyen duquel le refroidisseur d'air de suralimentation (4) peut être disposé sur un autre composant fonctionnel (32), où le dispositif de montage (3) présente des moyens (21) servant à compenser des dilatations du refroidisseur d'air de suralimentation (4), lesdites dilatations variant en fonction de la température, où le dispositif de montage (3) recouvre au moins partiellement le refroidisseur d'air de suralimentation (4), seulement sur trois côtés, où le dispositif de montage (3) présente un corps de base (31) recourbé en forme de u qui est fabriqué dans un matériau pouvant être soudé, où le corps de base (31) recourbé en forme de u présente un fond (19) sur lequel sont disposés des moyens de compensation (21), et le corps de base (31) recourbé en forme de u présente deux branches (14, 16) sur lesquelles est soudé le refroidisseur d'air de suralimentation (4), où le premier bac collecteur de liquide de refroidissement (7) présente un plateau à tubes (11) qui, comme une collerette (12), est en saillie latéralement par rapport au premier bac collecteur de liquide de refroidissement (7), où le refroidisseur d'air de suralimentation est soudé sur le dispositif de montage à l'aide de la collerette, de manière telle que la collerette (12) soit fixée par continuité de matière sur le dispositif de montage (3), au niveau d'une première extrémité (13) de la première branche (14) du dispositif de montage (3) et au niveau d'une première extrémité de la seconde branche (16), de sorte qu'un tel assemblage soudé représente un palier solidaire entre le refroidisseur d'air de suralimentation (2) et le dispositif de montage (3), où il est prévu, sur le fond du dispositif de montage (3), un palier libre (20) placé entre le refroidisseur d'air de suralimentation (2) et le dispositif de montage (3).

2. Refroidisseur d'air de suralimentation (4) selon la revendication 1, **caractérisé en ce que** des premiers composants (26) des moyens de compensation (21) sont formés par un fond (19) du dispositif de montage (3).

3. Refroidisseur d'air de suralimentation (4) selon l'une des revendications 1 ou 2, **caractérisé en ce que** d'autres composants (27) des moyens de compensation (21) sont formés par une partie de bac (24) du bac collecteur de liquide de refroidissement (8).
